# EUROPEAN PATENT SPECIFICATION

(11) **EP 2 134 787 B1**
(45) Date of publication and mention of the grant of the patent: **18.08.2010**
(21) Application number: 08735993.1
(22) Date of filing: 09.04.2008
(51) Int. Cl.: C08L 43/04

(54) **CONDENSATION CURABLE COMPOSITIONS HAVING IMPROVED SELF ADHESION TO SUBSTRATES**
KONDENSATIONSHÄRTBARE ZUSAMMENSETZUNGEN MIT VERBESSERTER SELBSTANHAFTUNG AN SUBSTRATE
COMPOSITIONS RÉTICULABLES PAR CONDENSATION PRÉSENTANT UNE AUTO-ADHÉRENCE AMÉLIORÉE AUX SUBSTRATS

(30) Priority: 16.04.2007 GB 0707278
(43) Date of publication of application: 23.12.2009
(73) Proprietor: Dow Corning Corporation, Midland, Michigan 48611 (US)
(72) Inventor: STAMMER, Andreas, B-6230 Obaix (BE); WOLF, Andreas Thomas Franz, 65510 Huenstetten (DE)
(74) Representative: Donlan, Andrew Michael
(86) International application number: PCT/EP2008/054267
(87) International publication number: WO 2008/125560

(56) References cited:
- EP-A- 0 545 116
- EP-A- 1 000 980
- EP-A- 1 598 402
- EP-A- 1 650 257

## Description

This invention relates to a condensation curable silyl functional hydrocarbon polymer composition with improved adhesion to substrates. Adhesion to key substrates is improved by use of an alkoxysilyl functional organic polymer or oligomer which is different from the condensation curable silyl functional organic hydrocarbon polymer used in the composition.

Condensation curable silyl functional hydrocarbon polymer compositions are useful when cured as sealants, adhesives, coatings, moulding and potting compounds, gels and additives. Condensation curable silyl functional hydrocarbon polymer compositions offer the characteristics of the organic backbone in combination with an environmentally and worker safe cure system. In the case of the polyisobutylene and butyl polymers, for instance, desirable characteristics include low gas and moisture permeability and relatively good UV stability, due to the complete or substantially complete saturation of the backbone. These features of the silyl functional condensation curable PIB and butyl compositions make them especially interesting as insulating glass sealants. These sealants have to display low moisture and gas permeability, good physical properties, as well as good and durable adhesion to key substrates for manufacturing insulated glass units, such as glass aluminium, anodized aluminium, and refined steel.

However, condensation curable hydrocarbon polymer compositions are known to display adhesion only to a limited number of substrates and even for those substrates adhesion is quite poor. It is advantageous to have condensation curable compositions containing silyl functional hydrocarbon organic polymers which adhere to substrates without the use of a separate primer.

Condensation curable hydrocarbon polymer compositions are still quite new in insulated glass (IG) applications, and the relevant art on adhesion promoters in these compositions is still quite limited. The adhesion promoters identified in the relevant art either do no allow to achieve good and durable adhesion to key substrates or have a toxicity problem associated with them. It appears that no satisfactorily performing adhesion promoter has been identified that allows to obtain adhesion to glass, aluminium, anodized aluminium and refined steel. This is especially true for the refined steel substrate, which generally is the most difficult substrate to obtain adhesion to. Refined steel, on the other hand, is becoming an increasingly important substrate for IG manufacture, due to its relatively low thermal conductivity. Furthermore, the insulating glass application requires that the adhesion is durable - this is typically assessed by exposing the sealant/substrate samples to accelerated weathering i.e. mainly combined ultraviolet light, heat and humidity exposure (often referred to as QUV weathering, in accordance with ASTM G154. Hot water immersion may alternatively be used.

Depending on the application, insulating glass sealants have to meet additional requirements. In many insulating glass unit constructions, the sealant is freely exposed to the gas volume between two or more glass panes. In such applications, the sealant should not give off substantial amounts of lower molecular weight materials, such as lower molecular weight fractions of plasticizers, anti-aging additives, or adhesion promoters, since this would cause "chemical fogging" of the units.

Some adhesion promoters such as aminosilanes, can cause bubbling or foaming in condensation curable hydrocarbon polymer compositions. This is not desirable, since it weakens the physical properties of the sealant and increases the sealant permeability to moisture and other gases. It is therefore desirable to find an adhesion promoter that minimizes or eliminates the foaming.

An objective of this invention, therefore, is an adhesion promoter composition which achieves good and durable adhesion to key substrates, especially those involved in the IG manufacture. Another objective of this invention is the provision of a sealant for insulated glass units which, when in contact to a gas volume between two or more glass panes, does not substantially contribute to chemical fogging.

US4904732 describes silicon curable polyisobutylene compositions and methods of making them. US5120379, JP 01-316804, and JP 01-316811 describe use of silicon curable polyisobutylene compositions suitable for insulating glass applications. Suitable examples of silylated polymers, copolymers and methods for their preparation are well known and include, for example the silylated copolymers disclosed in EP0320259, DE19821356, US4900772, US4904732; US5120379; US5262502; US5290873; US5580925, US4808664, US6380316; and US6177519. Alternatively, silylated polymers may be prepared by a method comprising conversion hydroxylated polybutadienes by, for example, reaction with isocyanate functional alkoxysilane, reaction with allylchloride in presence of Na followed by hydrosilylation.

JP 01-158065 describes the use of aminosilane adhesion promoters in condensation curable silyl functional hydrocarbon organic polymer compositions. JP 08-19270 describes use of nitrogen-containing adhesion promoters in condensation curable silyl functional hydrocarbon organic polymer compositions. US5804253 describes use of epoxy or isocyanate adhesion promoter in condensation curable silyl functional hydrocarbon organic polymer compositions to obtain adhesion to anodized aluminium substrates. WO 97/31032 mentions a coupling agent as an adhesion promoter in condensation curable silyl functional hydrocarbon organic polymer compositions, but the nature of the coupling agent is not specified.

JP 2001-303024 describes a composition containing (a) a condensation curable polyisobutylene (PIB) polymer having Si containing end-groups, (b) an organic compound having at least one amino group in the molecule, and (c) an organic compound containing at least one carbonyl group in the molecule in which the carbonyl group and the amino group contained in (b) and (c) react with each other to produce water. Preferably the amino- and carbonyl-groups are part of separate adhesion promoters.

A large proportion of sealant formulations are cured in the presence of moisture. Sufficient moisture can be derived in an assorted of ways. Patent application JP 11,209,540 A by Kaneka claims a curable composition containing essentially (A) a saturated silicon condensation-curable hydrocarbon-based polymer, (B) a hot-melt resin, (C) a curing catalyst and (D) water or a metal salt hydrate. EP 1,099,728 B1 provides a curable composition which comprises at least two components, namely (A) a main component comprising a saturated hydrocarbon polymer having at least one silicon-containing group, said silicon-containing group containing a silicon atom-bound hydroxy group or hydrolyzable group and being able to be crosslinked under formation of a siloxane bond, and (B) a curing agent comprising (b1) a silanol condensation catalyst and (b2) a moisture-containing drying agent other than a metal salt hydrate. The moisture can alternatively be produced by way of a by-product in a chemical reaction, EP 1,466,939 describes a room temperature fast silicon condensation-curable saturated hydrocarbon polymer composition comprising (A) a saturated silicon-curable hydrocarbon polymer, (B) a β-dicarbonyl compound, and (C) an amino-bearing organic compound, wherein the β-carbonyl group in component (B) is reactive with the amino group in component (C).The patent teaches that the generation of water by the reaction of the two compounds dramatically improves deep-section cure without sacrificing adhesion and electrical properties after water immersion. Patent application JP 08-041,358 describes compositions comprising a silicon condensation-curable saturated hydrocarbon polymer, a compound having at least one carboxyl group, and a compound having at least one amino group. The in-depth cure of the compound is accelerated by the water formed from the reaction of the carbonyl with the amino compound.

US6020446 describes a curable composition which comprises (a) a silicon condensation-curable saturated hydrocarbon polymer, (b) a silane coupling agent (adhesion promoter), and (c) a compound containing an unsaturated group capable of polymerizing upon reaction with atmospheric oxygen and/or a photo-polymerizing substance (tung oil is preferred).

EP1268703 describes a reactive blend of thermoplastic polymer particles based on butyl rubber, elastomeric block copolymers, poly-α-olefins and/or polyisobutylenes, in which some of the particles in the blend comprise polymers with reactive groups selected from hydroxyl groups, amino groups, carboxyl groups, carboxylic anhydride groups, mercapto groups, silane groups and/or hydrosilyl groups, and other particles in the blend contains polymers with reactive groups selected from isocyanate groups, epoxide groups, active olefinically unsaturated double bonds and/or water-forming or containing substances. This document describes the use of such compositions for producing insulating glass units, casting resin panes, solar collectors or façade elements.

The present inventors have found that the use of an adhesion promoter comprising alkoxysilyl substituted organic oligomer or polymer, and specifically an alkoxysilyl functional polybutadiene, in a silyl functional condensation curable hydrocarbon polymer composition, allows good and durable adhesion on key substrates without the use of a separate primer. Furthermore, adhesion promoters do not substantially contribute to chemical fogging in an IG unit in contrast to standard silane coupling agents, such as the amino-silanes, epoxy-silanes or isocyanate silanes.

This invention relates to a condensation curable composition comprising a product formed from components comprising:
A curable composition consisting essentially of:
(A) 100 parts by weight of a hydrocarbon polymer having a number average molecular weight of about 500 to about 300,000, and on average at least 1 hydrolyzable silyl group per molecule; and
(B) 0.1 to 100 parts by weight per 100 parts by weight of (A) of an alkoxy-silyl substituted organic adhesion promoter of an number average molecular weight in the range of 500 to 5,000, selected from the group consisting of di- or trialkoxy substituted polybutadiene, polyisoprene, polyisobutylene, copolymers of isobutylene and isoprene, copolymers of isoprene and butadiene, copolymers of isoprene and styrene, copolymers of butadiene and styrene and polyolefin polymers prepared by hydrogenating polyisoprene, polybutadiene or a copolymer of isoprene and styrene, a copolymer of butadiene and styrene or a copolymer of isoprene, butadiene and styrene, with the proviso that component (B) is different from component (A);
(C) 0.01 to 10 parts by weight per 100 parts by weight of (A) of a condensation cure catalyst;
(D) 0 to 300 parts by weight per 100 parts by weight of (A) of a filler selected from the group consisting of non-reinforcing fillers and low-reinforcing fillers;
(E) 0 to 150 parts by weight per 100 parts by weight of (A) of a reinforcing filler;
(F) 0 to 5 parts by weight per 100 parts by weight of (A) of water or a moisture-containing component.

Component (A) is a hydrocarbon polymer having on average at least 1 hydrolyzable silyl group per molecule. It is most preferred that component A is saturated or substantially saturated. The organic polymer may be linear or branched and may be a homopolymer, copolymer or terpolymer. The number average molecular weight of the organic polymer may be from 500 to 300,000, preferably from 1000 to 100,000 and most preferably from 1000 to 50,000. The organic polymer may also be present as a mixture of different organic polymers so long as there is on average at least 1 silyl groups per polymer molecule. Specific examples of the polymer chain include an ethylene-propylene copolymer; a polybutylene such as polyisobutylene; a copolymer of isobutylene with isoprene or the like; polychloroprene; polyisoprene; a copolymer of isoprene with butadiene, acrylonitrile, styrene, alpha-methylstyrene or the like; polybutadiene; a copolymer of butadiene with styrene, acrylonitrile or the like; and a polyolefin prepared by hydrogenating polyisoprene, polybutadiene, or a copolymer of isoprene or butadiene with acrylonitrile, styrene or the like.

All molecular weight values provided herein are provided in g/mol unless otherwise indicated.

The preferred hydrocarbon polymer comprises a homopolymer or a copolymer selected from the group consisting of a polybutylene where the polybutylene chain may comprise repeat units having the following formulas: 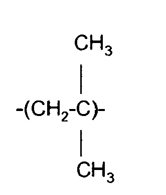 (i.e. an isobutylene unit) 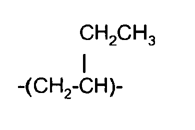 and 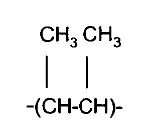 as well as rearranged products such as:

-(CH₂CH₂CH₂CH₂)-

and 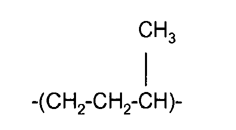 a polyisoprene, a polybutadiene, a copolymer of isobutylene and isoprene, a copolymer of isoprene and butadiene, a copolymer of isoprene and styrene, a copolymer of butadiene and styrene, a copolymer of isoprene, butadiene and styrene and a polyolefin polymer prepared by hydrogenating polyisoprene, polybutadiene or a copolymer of isoprene and styrene, a copolymer of butadiene and styrene or a copolymer of isoprene, butadiene and styrene.

It is more preferred that the hydrocarbon polymer comprises a homopolymer or copolymer wherein at least 50 mole percent of the repeat units are isobutylene units of the following structure:

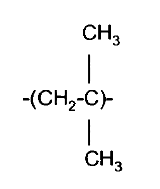

One or more hydrocarbon monomers, such as isomers of butylene, styrene, derivatives of styrene, isoprene and butadiene may be co-polymerized with the isobutylene, the preferred co-monomer being selected from 1-butene, α-methylstyrene and isoprene. It is even more preferred that the organic polymer comprise at least 80 mole percent of the isobutylene repeat units described above.

Preferably the hydrolyzable silyl group on Component (A) is represented by

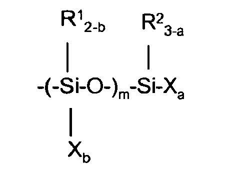

Where R¹ and R² each is independently selected from an alkyl group having 1 to 20 carbon atoms, an aryl group having 6 to 20 carbon atoms, an aralkyl group having 7 to 20 carbon atoms and a triorganosiloxy group represented by R'₃SiO-, wherein R' is a monovalent alkyl group having 1 to 20 carbon atoms; where X is a hydroxyl group or a hydrolyzable group; a is 0 to 3, b is 0 to 2, m is 0 to 19 and a + mb is greater than 1. Preferred is where X is selected from -OCH₃ and -OCH₂CH₃. Examples of silyl functional butylene polymers especially useful herein may be prepared by methods known in the art, include US4758631, US6177519 and US6380316.

Alternatively Component (A) may comprise a modified poly-α-olefin based polymer, i.e. a modified poly- α-olefin material where comprising -SiR³_{3-d} (OR³)_{d} groups in which each R³ may be the same or different and is an alkyl group typically methyl or ethyl and d is an integer from 1 to 3 inclusive.

The alkoxy-silyl substituted organic adhesion promoter, Component (B), can be an di- or trialkoxysilyl substituted organic oligomer or polymer of a number average molecular weight in the range of 500 to 5,000, selected from the group consisting of di- or trialkoxysilyl substituted polybutadiene, polyisoprene, polyisobutylene, copolymers of isobutylene and isoprene, copolymers of isoprene and butadiene, copolymers of isoprene and styrene, copolymers of butadiene and styrene and polyolefin polymers prepared by hydrogenating polyisoprene, polybutadiene or a copolymer of isoprene and styrene, a copolymer of butadiene and styrene or a copolymer of isoprene, butadiene and styrene. The alkoxy group can be methoxy, ethoxy, propoxy or butoxy. Preferably from 0.1 to 100 parts by weight per 100 parts by weight of (A) of an alkoxy-silyl substituted organic oligomer/polymer is used.

The alkoxysilyl substituted adhesion promoter is preferably an alkoxysilyl substituted polybutadiene, alkoxysilyl substituted polyisoprene or alkoxysilyl substituted polyisobutylene. It is more preferred that the alkoxysilyl substituted organic adhesion promoter is a trimethoxysilyl substituted 1,4-cis-polybutadiene. The alkoxysilyl substituted organic adhesion promoter is added in an amount from 0.1 to 100 parts by weight based on 100 parts by weight of organic polymer (i.e. (A)). It is preferred for improved adhesion to use from 1 to 50 parts alkoxy-silicon compound. It is more preferred to use from 5 to 20 parts alkoxy-silicon compound. The alkoxy-silyl substituted organic adhesion promoter may be added as a single species or as a mixture of two or more different species. A preferred adhesion promoter is trimethoxyllsilyl-substituted polybutadiene having a trimethoxyllsilyl content of about 0.5 to 30 weight percent. A more preferred adhesion promoter is trimethoxysilyl-substituted polybutadiene having a trimethoxylsilyl content of about 1 to 15 percent and most preferred is when such a promoter has a functionality of about 2 to 10 percent. Preferably, the molecular weight of the alkoxy-silyl substituted organic oligomer or polymer is between 500-5,000 g/mol.

Component (C) comprises from 0.01 to 10 parts by weight per 100 parts by weight of (A) of a condensation cure catalyst. Any suitable condensation catalysts may be used, as a condensation cure catalyst for the composition in accordance with the present invention. These may include condensation catalysts incorporating tin, lead, antimony, iron, cadmium, barium, manganese, zinc, chromium, cobalt, nickel, aluminium, gallium germanium, titanium and zirconium. Examples include metal triflates. Useful organotin compounds are those where the valence of the tin is either +2 or +4. These tin compounds are known in the art to promote the reaction between alkoxy groups substituted on silicon and hydroxyl groups substituted on silicon. Typical tin compounds useful as condensation catalysts include stannous salts of carboxylic acids such as stannous stearate, stannous oleate, stannous naphthanate, stannous hexoate, stannous succinate, stannous caprylate, and stannous octoate; and stannic salts of carboxylic acids, such as dibutyltindilaurate, dibutyltindiacetate, dibutyltindioctoate, dibutyltindiformate, and dibutyltindineodecanoate, as well as partial hydrolysis products of the above. Organic tin metal catalysts such as triethyltin tartrate, tin octoate, tin oleate, tin naphthate, butyltintri-2-ethylhexoate, tinbutyrate, carbomethoxyphenyl tin trisuberate, isobutyltintriceroate, and diorganotin salts especially diorganotin dicarboxylate compounds such as dibutyltin dilaurate, dimethyltin dibutyrate, dibutyltin dimethoxide, dibutyltin diacetate, dimethyltin bisneodecanoate Dibutyltin dibenzoate, , stannous octoate, dimethyltin dineodeconoate, dibutyltin dioctoate of which dibutyltin dilaurate, dibutyltin diacetate, dibutyltindiacetylacetonate and dibutyltindimethoxylate are particularly preferred.

Titanate and/or zirconate based catalysts may comprise a compound according to the general formula Ti[OR⁵]₄ and Zr[OR⁵]₄ respectively where each R⁵ may be the same or different and represents a monovalent, primary, secondary or tertiary aliphatic hydrocarbon group which may be linear or branched containing from 1 to 10 carbon atoms. Optionally the titanate may contain partially unsaturated groups. However, preferred examples of R⁵ include but are not restricted to methyl, ethyl, propyl, isopropyl, butyl, tertiary butyl and a branched secondary alkyl group such as 2,4-dimethyl-3-pentyl. Preferably, when each R⁵ is the same, R⁵ is an isopropyl, branched secondary alkyl group or a tertiary alkyl group, in particular, tertiary butyl.

Alternatively, the titanate may be chelated. The chelation may be with any suitable chelating agent such as an alkyl acetylacetonate such as methyl or ethylacetylacetonate. Any suitable chelated titanates or zirconates may be utilised. Preferably the chelate group used is a monoketoester such as acetylacetonate and alkylacetoacetonate giving chelated titanates such as, for example diisopropyl bis(acetylacetonyl)titanate, diisopropyl bis(ethylacetoacetonyl)titanate, diisopropoxytitanium Bis(Ethylacetoacetate) and the like. Examples of suitable catalysts are additionally described in EP1254192 and WO200149774.

Preferably the condensation catalyst is present in an amount of from 0.1 to 5 parts by weight per 100 parts by weight of (A).

Component (D) is a filler that provides little or no reinforcing function to the composition. Such fillers may be used to pigment, improve fire resistance, or modify other properties, or simply to extend the composition. Examples of fillers used for Component (D) are calcium carbonate, talc, magnesium carbonate, diatomite, titanium oxide, bentonite, organic bentonite, ferric oxide, zinc oxide, hydrogenated castor oil, asbestos, glass fiber, filament, and silas balloon. Additional non-reinforcing fillers such as crushed quartz, diatomaceous earths, barium sulphate, iron oxide, titanium dioxide, low or non-reinforcing grades of carbon black, talc, wollastonite. Other fillers which might be used alone or in addition to the above include aluminite, calcium sulphate (anhydrite), gypsum, calcium sulphate, magnesium carbonate, clays such as kaolin, aluminium trihydroxide, magnesium hydroxide (brucite), graphite, copper carbonate, e.g. malachite, nickel carbonate, e.g. zarachite, barium carbonate, e.g. witherite and/or strontium carbonate e.g. strontianite.

Further suitable fillers of component (D) are low reinforcing or non-reinforcing grades of aluminium oxide, silicates from the group consisting of olivine group; garnet group; aluminosilicates; ring silicates; chain silicates; and sheet silicates. The olivine group comprises silicate minerals, such as but not limited to, forsterite and Mg₂SiO₄. The garnet group comprises ground silicate minerals, such as but not limited to, pyrope; Mg₃Al₂Si₃O₁₂; grossular; and Ca₂Al₂Si₃O₁₂. Aluninosilicates comprise ground silicate minerals, such as but not limited to, sillimanite; Al₂SiO₅; mullite; 3Al₂O₃.2SiO₂; kyanite; and Al₂SiO₅. The ring silicates group comprises silicate minerals, such as but not limited to, cordierite and Al₃(Mg,Fe)₂[Si₄AlO₁₈]. The chain silicates group comprises ground silicate minerals, such as but not limited to, wollastonite and Ca[SiO₃].

Further suitable fillers of component (D) are the sheet silicates group which comprises silicate minerals, such as but not limited to, mica; K₂Al₁₄[Si₆Al₂O₂₀](OH)₄; pyrophyllite; Al₄[Si₈O₂₀](OH)₄; talc; Mg₆[Si₈O₂₀](OH)₄; serpentine for example, asbestos; Kaolinite; Al₄[Si₄O₁₀](OH)₈; and vermiculite. These fillers are of particular interest for lowering the gas and moisture permeability of the cured composition.

These fillers, when required, may be used alone or in combination to add up to 300 parts by weight per 100 parts by weight of Component (A).

Component (E) is a reinforcing filler used improve the strength of the composition on curing. Component (E) is selected from the group consisting of fumed silica, precipitated silica, silicic acid anhydride, water-containing silicic acid, reinforcing grades of carbon black, calcined clay, clay, and active zinc white. These fillers may be used alone or in combination to add up to 100 parts by weight per 100 parts by weight Component (A).

The fillers of component (D) and (E) may if deemed required, be treated to render them hydrophobic using a surface treatment of the filler(s) for example with a fatty acid or a fatty acid ester such as a stearate, or with organosilanes, organosiloxanes, or organosilazanes hexaalkyl disilazane or short chain siloxane diols to render the filler(s) hydrophobic and therefore easier to handle and obtain a homogeneous mixture with the other sealant components The surface treatment of the fillers makes the ground silicate minerals easily wetted by the silicone polymer. These surface modified fillers do not clump, and can be homogeneously incorporated into the silyl functional organic polymer (Component (A)). This results in improved room temperature mechanical properties of the uncured and cured compositions. Furthermore, the surface treated fillers give a lower conductivity than untreated or raw material.

Component (F) 0 to 5 parts by weight per 100 parts by weight of (A) water or a moisture-containing component. The moisture-containing or moisture-generating component provides moisture to enhance the cure of the composition. Component (F) can be selected from hydrated salts such as calcium sulfate or sodium sulfate pastes of fillers such as calcium carbonate with water, and saturated molecular sieves, such as zeolite. Other moisture generating materials may be selected from a moisture-containing drying agent. Water may be generated in-situ as a by-product of a chemical reaction, e.g. as described in EP1466939, JP08-041358 and JP2001-303,024.

In addition to the above ingredients, the composition may include additives which impart or enhance certain properties of the cured composition or facilitate processing of the curable composition, as long as the objectives of the invention are met. Typical additives include, but are not limited to for example plasticizers, extenders, molecular sieve desiccants, pigments, dyes, and heat and/or ultraviolet light stabilizers. The effect of any such additives should be evaluated as to their result and impact on other properties of the composition. Of these additives plasticisers are regularly utilised in such compositions. Any suitable plasticiser may be utilised. Suitable plasticisers are those which are compatible with the compositions in accordance with the present invention and which are substantially non-fogging when tested according to ASTM E2189-02 and/or EN 1279-6 (July 2002) for an exposure period of 168 hours (7 days). Specific examples include liquid polyolefin plasticisers such as low molecular weight PIBs (Mn = from about 800 to 4000) and suitable process oils such as the commercially available Idemitsu KP100 plasticizer, supplied by Apollo Chemical Corporation, Burlington, NC, USA. Plasticisers may be present at a level of up to 200 parts by weight per 100 parts by weight of component A.

The condensation curable composition of this invention may be prepared by mixing all the ingredients together (one-component formulation). When all of the ingredients are mixed together, the composition will begin to cure when exposed to moisture. However, because of the low moisture permeability of hydrocarbon polymers, the cure will be very slow and will be limited to the few top millimetres exposed to the atmosphere. It is therefore desirable to be prepared the composition in at least two parts. Placing the PIB polymer (A), adhesion promoter (B), plasticizer, non-reinforcing or reinforcing fillers and other additives in part A and the cure catalyst (C), plasticizer, non-reinforcing or reinforcing fillers and other additives in part B is the preferred way to make a two part system. When present in two part holt melt compositions in accordance with the present invention, thermoplastic additives are contained in Part A. At the time of application, the contents of the two parts are mixed together and curing occurs.

The inventors have determined that the addition of an alkoxysilyl substituted organic adhesion promoter to a condensation curable silyl functional hydrocarbon polymer, which is preferably saturated or substantially saturated, enables the composition upon curing to have self adhesion to substrates.

Whilst a composition in the present invention will readily cure at room temperature it may alternatively be utilised as a hot melt adhesive composition in which component A alone or in combination with an additional thermoplastic component provide the composition with a thermosetting characteristic upon heating. The additional thermoplastic additive functions as a non-reactive binder (at least with the cure system involved in the composition). "Hot melt" materials may be reactive or unreactive. Reactive hot melt materials are chemically curable thermoset products which are inherently high in strength and resistant to flow (i.e. high viscosity) at room temperature. Compositions containing reactive or non-reactive hot melt materials are generally applied to a substrate at elevated temperatures (i.e. temperatures greater than room temperature, typically greater than 50°C) as the composition comprises at least one organic resin constituent which is significantly less viscous at elevated temperatures (e.g. 50 to 200°C) than at room temperature or thereabouts. Hot melt materials are applied on to substrates at elevated temperatures as flowable masses and are then allowed to quickly "resolidify" merely by cooling. The thermoplastic component typically has a (midpoint) glass transition points (T_{g}) at temperatures below 0°C. The viscosity of hot melt compositions tend to vary significantly with change in temperature from being highly viscous at relatively low temperatures (i.e. at or below room temperature) to having comparatively low viscosities as temperatures increase towards 200°C. The hot melt resins such as, for example, polyisobutylenes may have viscosities of between 10 and 1000 Pa.s at 150°C whereas, upon cooling, the highly viscous nature returns with the viscosity being typically greater than 5000 Pa.s at room temperature. It should be appreciated that whilst component D is of a chemically similar basic structure as both component A and the optional additional thermoplastic additive, Component (D) can't function as a thermoplastic constituent in a hot melt adhesive application due to the limitation on molecular weight as hereinbefore described.

The additional thermoplastic additive, when present in the composition may comprise one or more of the following examples polyolefin resins (such as PIB,a high density polyethylene (HDPE), a low density polyethylene (LDPE), a linear low density polyethylene (LLDPE), an ultrahigh molecular weight polyethylene (UHMWPE), an isotactic polypropylene, a syndiotactic polypropylene, and an ethylene-propylene copolymer resin); polyamide resins (such as nylon 6 (N6), nylon 6,6 (N6,6), nylon 4,6 (N4,6), nylon 11 (N11), nylon 12 (N12), nylon 6,10 (N6,10), nylon 6,12 (N6,12), a nylon 6/6,6 copolymer (N6/6,6), a nylon 6/6,6/6,10 copolymer (N6/6,6/6,10), a nylon MXD6 (MXD6), nylon 6T, a nylon 6/6T copolymer, a nylon 6,6/PP copolymer, and a nylon 6,6/PPS copolymer); polyester resins (such as aromatic polyesters including polybutylene terephthalate (PBT) and polyethylene terephthalate (PET)); polyether resins (such as polyphenylene oxide (PPO), modified polyphenylene oxide (modified PPO), polysulfone (PSF), and polyether ether ketone (PEEK)); polymethacrylate resins (such as polymethyl methacrylate (PMMA) and polyethyl methacrylate); polyvinyl resins (such as a vinyl alcohol/ethylene copolymer (EVOH), polyvinylidene chloride (PVDC), and a vinylidene chloride/methyl acrylate copolymer); and fluororesins (such as polyvinylidene fluoride (PVDF) and polychlorofluoroethylene (PCTFE)); and polyacrylonitrile resins (PAN).

Polyolefin resins, polyester resins, polyether resins, and fluororesins each having a heat distortion temperature of 50° C. or higher are preferable because the composition of the present invention to be obtained has good moldability and good resistance to heat deformation due to, for example, the outside air temperature when the composition of the present invention is used in a spacer or the like of an insulating glass unit to be described later, and reduction in moisture vapour transmission due to moisture absorption can be suppressed. Alternatively the thermoplastic resin is more preferably a low density polyethylene (LDPE) or a linear low density polyethylene (LLDPE) because the resulting composition has a low heat shrinkage, good moldability, and a low moisture vapour permeability and an insulating glass unit produced using the composition is excellent in initial dew point performance. The thermoplastic resin component may be used alone or as a mixture of two or more resins.

Compositions in accordance with the present invention may be used for a wide range of sealant and adhesive applications. These include applications requiring low permeability (in terms of gases or moisture) seals or adhesives, e.g. sealing, encapsulation or potting materials for electric or electronic components, automotive electronic seals, automotive headlight seals and the like. The use of compositions in accordance with the present invention in the form of a hot melt adhesive render such compositions suitable for applications requiring low gas permeability (in terms of gas or moisture) combined with fast green strength applications that require quick handling of components, e.g. electronic devices. In accordance with the process and/or composition of the present invention for use as a primary (seal between spacer and glass), secondary (seal between the two glass panes around the spacer) or single sealant (use for both primary and secondary seal) as an edge seal in an insulation glass unit. Use of the composition as a spacer/seal combination in an insulating glass unit either with or without use of a secondary sealant.

### EXAMPLES

The following examples are presented for illustrative purposes. All measurements given in parts by weight are relative to 100 parts of polymer unless otherwise indicated and all viscosity values are taken at 25°C unless otherwise indicated.

### EXAMPLES A AND B, COMPARATIVE EXAMPLES C AND D

### PREPARATION OF A BASE:

150 g of a paraffin oil plasticizer (Idemitsu KP100 plasticizer, supplied by Apollo Chemical Corporation, Burlington, NC, USA), were placed in a quarter gallon planetary mixer and 247g of a dimethoxysilane end-blocked (telechelic) polyisobutylene (PIB) having a molecular weight Mn of 10,000 (Epion^{®} 303S supplied by Kaneka Corporation, 3-2-4, Nakanoshima, Kita-ku, Osaka 530, Japan), were added and mixed for 5 min. at 40 rpm. In three separate steps, 65 g of Socal^{®} 312, a fatty acid treated, precipitated CaCO₃ supplied by Solvay, Brussels, Belgium, were added in each step and after each addition the composition was mixed for 5 minutes at 40 rpm.

Next, 45 g of BLR3, a fatty acid treated, ground CaCO3 supplied by Omya, France, were added and mixed for 5 minutes at 40 rpm. A premix of 42.4g BLR3 and 4g of water, prepared in a mixer, was added and mixed for 20 min at 40 rpm. The material was scraped down and mixed for 20 min at 80rpm under vacuum. A smooth paste was obtained. The base was aged for at least one week prior to use.

Next to 100 g of base the adhesion promoter was added by means of a Semco cartridge mixer (made by Courtlands Aerospace, California) mixed into the above material. The material was aged for one day and catalyzed with 0.6g dibutyltindiacetate using again a Semco mixer.
(A) 2.9g Polyvest^{®} 25 (a trimethoxylsilyl functional, liquid 1,4-cis-polybutadiene, supplied by Huels Aktiengesellschaft, 45764 Marl, Germany, having a mol. weight Mn of 1800-2500 g/mol, a viscosity of 1500-1900 mPas at 20°C
(B) 2.9g Polyvest^{®} 50 (a trimethoxylsilyl functional, liquid 1,4-cis-polybutadine, supplied by Huels Aktiengesellschaft, 45764 Marl, Germany, having a viscosity of about. 7200-9000 mPas at 20°C
(C) 0.7g Silquest^{®} A1100 gamma-aminopropyltriethoxysilane supplied by CKWitco, 7, rue du Pré-Bouvier, CH-1217 Meyrin, Switzerland
(D) no adhesion promoter

The material was then placed on float glass, Refined (stainless) steel, mill finish aluminium and anodized aluminium substrates. The substrates were solvent cleaned with an acetone/isopropanol mixture (50/50).

Adhesion was tested after 4 weeks at room temperature cure, followed by an additional water immersion at 50° C.

Samples were tested by tab adhesion in which samples are applied to substrate surfaces and cured/aged as required. A razor blade is then used to detach one end of the cured sealant from the substrate surface and that edge is held between the tester's index finger and thumb and pulled in a perpendicular direction away from the substrate surface. Subsequent to the removal of the sample from the substrate surface the said surface is analysed to determine the type of failure which occurred during the test. These were rated as:
(i) cohesive failure (CF), - where when pulled the break is in the adhesive i.e. at least part of the adhesive remains attached to the substrate surface - indicating that the bond strength between the substrate and the sealant is stronger than the adhesive to itself;
(ii) boundary failure (BF); where when pulled the cured sealant is substantially removed from the substrate but does leave a visible residue of sealant attached to the surface of the substrate; and
(iii) adhesive failure (AF). - where when pulled the cured sealant is removed from the substrate surface without leaving a residue..
(iv) AF/CF (mixture of adhesive and cohesive failure)

Typically cured sealants which provide CF and or BF results are deemed to have an acceptable adhesion to the substrate surface but cured sealants which give AF results are deemed not adequately adhered to the substrate surface.

The substrates used to determine the type of adhesion using the above test method were samples of float glass (glass), refined steel (steel), mill finished aluminium (AI MF) and anodized aluminium (AI Anod). The cure process at room temperature for compositions in accordance with the present application may take longer than 1 week dependent on the amount of catalyst present.

**Table 1 - Adhesion after curing/aging for a period of 4 weeks at room temperature followed by immersion in water for 1 additional week at 50° C**

| Substrates | Example A | Example B | Comparative Example C | Comparative Example D |
|---|---|---|---|---|
| Glass | CF | CF | AF | CF |
| Steel | AF | CF | CF | AF |
| AI MF | CF | CF | CF | AF |
| AI Anod | AF | CF | CF | AF |

Compositions in accordance with the present invention are intended for use as sealants for insulating glazing. To be utilizable for such applications the sealant compositions must strongly adhere to both the glass used for the window and the metal used in the frame or as a spacer or the like. It will be noted that Example A is suitable for use as a sealant between glass and mill finished aluminium as the tab adhesion test results shown in Table 1 above indicate in both instances cohesive failure. However, in the case of Comparative example C, the composition utilised fails to bond sufficiently with glass (adhesive failure) and in comparative Example D the sealant does not adhere to any of the metallic substrates used as spacers or frames or the like as in each case the results in Table 1 indicate mere adhesive failure.

## Claims

1. A curable composition consisting essentially of:
A. 100 parts by weight of an organic hydrocarbon polymer having a number average molecular weight of about 500 to about 300,000, and on average at least 1 hydrolyzable silyl group per molecule; and
B. 0.1 to 100 parts by weight per 100 parts by weight of (A) of an alkoxy-silyl substituted organic adhesion promoter of an number average molecular weight in the range of 500 to 5,000, selected from the group consisting of di- or trialkoxy-silyl substituted polybutadiene, polyisoprene, polyisobutylene, copolymers of isobutylene and isoprene, copolymers of isoprene and butadiene, copolymers of isoprene and styrene, copolymers of butadiene and styrene and polyolefin polymers prepared by hydrogenating polyisoprene, polybutadiene or a copolymer of isoprene and styrene, a copolymer of butadiene and styrene or a copolymer of isoprene, butadiene and styrene, with the proviso that component (B) is different from component (A);
C. 0.01 to 10 parts by weight per 100 parts by weight of (A) of a condensation cure catalyst;
D. 0 to 300 parts by weight per 100 parts by weight of (A) of a filler selected from the group consisting of non reinforcing fillers and low-reinforcing fillers;
E. 0 to 150 parts by weight per 100 parts by weight of (A) of a reinforcing filler;
F. 0 to 5 parts per 100 parts by weight of (A) by weight water or a moisture-containing component.

2. The curable composition of Claim 1 where Component (A) is saturated or substantially saturated.

3. The curable composition of Claim 1 or 2 where the number average molecular weight of Component (A) is from about 1000 to 50,000.

4. The curable composition of claim 1 where Component (A) is selected from the group consisting of an α-olefin, polyisobutylene, ethylene-propylene copolymer, a polybutylene a copolymer of isobutylene with isoprene, polychloroprene, polyisoprene, a copolymer of isoprene with butadiene, a copolymer of isoprene with acrylonitrile, a copolymer of isoprene with styrene, a copolymer of isoprene with alpha-methylstyrene, polybutadiene, a copolymer of butadiene with styrene, a copolymer of butadiene with acrylonitrile, a polyolefin prepared by hydrogenating a polyisoprene with acrylonitrile, a polyolefin prepared by hydrogenating a polyisoprene with styrene, a polyolefin prepared by hydrogenating a polybutadiene with acrylonitrile, a polyolefin prepared by hydrogenating a polybutadiene with styrene, a copolymer of isoprene with acrylonitrile, and a copolymer of butadiene with acrylonitrile.

5. The curable composition of any preceding Claim where the hydrolyzable silyl group is represented by 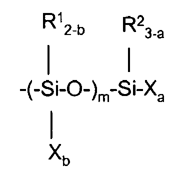 Where R¹ and R² each is independently selected from an alkyl group having 1 to 20 carbon atoms, an aryl group having 6 to 20 carbon atoms, an aralkyl group having 7 to 20 carbon atoms and a triorganosiloxy group represented by R'₃SiO-, wherein R' is a monovalent alkyl group having 1 to 20 carbon atoms; where X is a hydroxyl group or a hydrolyzable group; a is 0 to 3, b is 0 to 2, m is 0 to 19 and a + mb is greater than 1.

6. The curable composition of Claim 5 where X is selected from -OCH₃ and -OCH₂CH₃.

7. The curable composition of any preceding Claim where Component (B) is an alkoxysilyl-substituted polybutadiene.

8. The curable composition of any preceding Claim where Component (B) is present at 1 to 50 parts by weight per 100 parts by weight of Component (A) and/or where Component (C) is 0.1 to 5 parts by weight of a condensation cure catalyst selected from the group consisting of dibutyltin diacetate, dibutyltin diacetylacetonate, and dibutyltin dimethoxylate

9. The curable composition of any one of claims 1 to 7 where Component (C) is 0.1 to 5 parts by weight of a condensation cure catalyst selected from the group of Titanate and/or zirconate based catalysts having the general formula Ti[OR⁵]₄ and Zr[OR⁵]₄ where each R⁵ may be the same or different and represents a monovalent, primary, secondary or tertiary aliphatic hydrocarbon group which may be linear or branched containing from 1 to 10 carbon atoms; chelated titanates and/or zirconates.

10. The curable composition of any preceding claim where component (D) is selected from the group of fillers consisting of calcium carbonate, talc, magnesium carbonate, diatomite, titanium oxide, bentonite, organic bentonite, ferric oxide, zinc oxide, hydrogenated castor oil, asbestos, glass fiber, filament, and glass or plastic hollow micro-balloons.

11. The curable composition of any preceding Claim where Component (E) is selected from the group consisting of fumed silica, precipitated silica, silicic acid anhydride, water-containing silicic acid, reinforcing grade carbon black, calcined clay, clay, and active zinc white.

12. The curable composition of any preceding Claim additionally comprising a thermoplastic component and/or up to 200 parts by weight of a substantially non-fogging plasticiser.

13. A hot melt adhesive composition comprising the composition in accordance with any one of claims 1 to 12 **characterised in that** component A alone or in combination with an additional thermoplastic additive is utilised as a thermoplastic component.

14. A hot melt adhesive composition in accordance with claim 13 **characterised in that** the additional thermoplastic additive is selected from one or more of the following polyolefin resins, a polyisobutylene (PIB), a low density polyethylene (LDPE), a linear low density polyethylene (LLDPE), an ultrahigh molecular weight polyethylene (UHMWPE), an isotactic polypropylene, a syndiotactic polypropylene, and an ethylene-propylene copolymer resin); polyamide resins; polyester resins polyether resins, , polysulfone (PSF), and polyether ether ketone (PEEK)); polymethacrylate resins; polyvinyl resins and fluororesins and polyacrylonitrile resins (PAN).

15. Use of a composition in accordance with any one of claims 1 to 12 as a primary, secondary or single sealant in the edge seal of an insulation glass unit or in a spacer/seal combination in an insulating glass unit either with or without use of a secondary sealant.

16. A two part condensation curable composition in accordance with any one of claims 1 to 12 **characterised in that** a first part contains component A and a second part contains component C and any other components and/or additives are present in either or both parts.

## Patentansprüche

1. Härtbare Zusammensetzung, im Wesentlichen bestehend aus
A. 100 Gewichtsteilen eines organischen Kohlenwasserstoffpolymers mit einem statistischen Molekulargewicht von etwa 500 bis etwa 300.000 und mit durchschnittlich mindestens 1 hydrolysierbaren Silylgruppe pro Molekül; und
B. 0,1 bis 100 Gewichtsteilen pro 100 Gewichtsteile (A) eines Alkoxysilylsubstituierten organischen Adhäsionsförderers mit einem statistischen Molekulargewicht im Bereich von 500 bis 5.000, ausgewählt aus der Gruppe Di- oder Trilalkoxysilyl-substituiertes Polybutadien, Polyisopren, Polyisobutylen, Copolymere aus Isobutylen und Isopren, Copolylere aus Isopren und Butadien, Copolymere aus Isopren und Styrol, Copolymere aus Butadien und Styrol und Polyolefinpolymere, hergestellt durch Hydrierung von Polyisopren, Polybutadien oder von einem Copolymer aus Isopren und Styrol, von einem Copolymer aus Butadien und Styrol oder von einem Copolymer aus Isopren, Butadien und Styrol, mit der Maßgabe, dass Komponente (B) unterschiedlich von der Komponente (A) ist;
C. 0,01 bis 10 Gewichtsteile pro 100 Gewichtsteile (A) eines Kondensationshärtungskatalysators;
D. 0 bis 300 Gewichtsteile pro 100 Gewichtsteile (A) eines Füllstoffs, ausgewählt aus der Gruppe nicht-verstärkende Füllstoffe und niedrigverstärkende Füllstoffe;
E. 0 bis 150 Gewichtsteile pro 100 Gewichtsteile (A) eines verstärkenden Füllstoffs;
F. 0 bis 5 Gewichtsteile pro 100 Gewichtsteile (A) Wasser oder eine feuchtigkeitshaltige Komponente.

2. Härtbare Zusammensetzung gemäß Anspruch 1, wobei Komponente (A) gesättigt oder im Wesentlichen gesättigt ist.

3. Härtbare Zusammensetzung gemäß Anspruch 1 oder 2, wobei das statistische Molekulargewicht der Komponente (A) von etwa 1000 bis 50.000 ist.

4. Härtbare Zusammensetzung gemäß Anspruch 1, wobei Komponente (A) ausgewählt ist aus der Gruppe α-Olefin, Polyisobutylen, Ethylen-Propylen-Copolymer, ein Polybutylen ein Copolymer aus Isobutylen mit Isopren, Polychloropren, Polyisopren, ein Copolymer aus Isopren mit Butadien, ein Copolymer aus Isopren mit Acrylnitril, ein Copolymer aus Isopren mit Styrol, ein Copolymer aus Isopren mit alpha-Methylstyrol, Polybutadien, ein Copolymer aus Butadien mit Styrol, ein Copolymer aus Butadien mit Acrylnitril, ein Polyolefin, hergestellt durch Hydrierung von einem Polyisopren mit Acrylnitril, ein Polyolefin, hergestellt durch Hydrierung von einem Polyisopren mit Styrol, ein Polyolefin, hergestellt durch Hydrierung von einem Polybutadien mit Acrylnitril, ein Polyolefin, hergestellt durch Hydrierung von einem Polybutadien mit Styrol, ein Copolymer aus Isopren mit Acrylnitril und ein Copolymer aus Butadien mit Acrylnitril.

5. Härtbare Zusammensetzung gemäß irgendeinem der vorhergehenden Ansprüche, wobei die hydrolisierbare Silylgruppe dargestellt wird durch 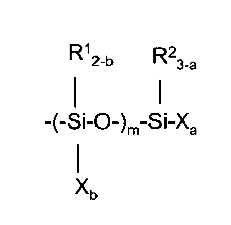 worin ist
R¹ und R² jeweils unabhängig ausgewählt aus einer Alkylgruppe mit 1 bis 20 Kohlenstoffatomen, einer Arylgruppe mit 6 bis 20 Kohlenstoffatomen, einer Aralkylgruppe mit 7 bis 20 Kohlenstoffatomen und einer Triorganosiloxygruppe, dargestellt durch R'₃SiO-, worin R' eine einwertige Alkylgruppe mit 1 bis 20 Kohlenstoffatomen ist; X eine Hydroxylgruppe oder hydrolysierbare Gruppe ist, a 0 bis 3 ist, b 0 bis 2 ist, m 0 bis 19 ist und a + mb größer als 1 ist.

6. Härtbare Zusammensetzung gemäß Anspruch 5, wobei X ausgewählt ist aus -OCH₃ und -OCH₂CH₃.

7. Härtbare Zusammensetzung gemäß irgendeinem der vorhergehenden Ansprüche, wobei Komponente (B) ein Alkoxysilyl-substituiertes Polybutadien ist.

8. Härtbare Zusammensetzung gemäß irgendeinem der vorhergehenden Ansprüche, wobei Komponente (B) mit 1 bis 50 Gewichtsteilen pro 100 Gewichtsteile (A) vorliegt und/oder wobei Komponente (C) 0,1 bis 5 Gewichtsteile eines Kondensationshärtungskatalysators ist, ausgewählt aus der Gruppe Dibutylzinndiacetat, Dibutylzinndiacetylacetonat und Dibutylzinndimethoxylat.

9. Härtbare Zusammensetzung gemäß irgendeinem der Ansprüche 1 bis 7, wobei Komponente (C) 0,1 bis 5 Gewichtsteile eines Kondensationshärtungskatalysators ist, ausgewählt aus der Gruppe Katalysatoren auf Basis von Titanat und/oder Zirkonat mit der Allgemeinformel Ti[OR⁵]₄ und Zr[OR⁵]₄, wobei jedes R⁵ gleich oder unterschiedlich sein kann und eine einwertige, primäre, sekundäre oder tertiäre aliphatische Kohlenwasserstoffgruppe darstellt, welche linear oder verzweigt sein kann mit von 1 bis 10 Kohlenstoffatomen; chelierte Titanate und/oder Zirkonate.

10. Härtbare Zusammensetzung gemäß irgendeinem der vorhergehenden Ansprüche, wobei Komponente (D) ausgewählt ist aus der Gruppe Füllstoffe, bestehend aus Calciumcarbonat, Talk, Magnesiumcarbonat, Kieselgur, Titanoxid, Bentonit, organischer Bentonit, Eisenoxid, Zinkoxid, hydriertes Kastoröl, Asbest, Glasfaser, Endlosfaser und hohle Glas- oder Plastik-Mikrokugeln.

11. Härtbare Zusammensetzung gemäß irgendeinem der vorhergehenden Ansprüche, wobei die Komponente (E) ausgewählt ist aus der Gruppe pyrogenes Siliciumdioxid, ausgefälltes Siliciumdioxid, Kieselsäureanhydrid, wasserhaltige Kieselsäure, verstärkender Ruß, kalzinierter Ton, Ton und aktiviertes Zinkweiß.

12. Härtbare Zusammensetzung gemäß irgendeinem der vorhergehenden Ansprüche, zudem umfassend eine thermoplastische Komponente und/oder bis zu 200 Gewichtsteile eines im Wesentlichen nicht trübenden Weichmachers.

13. Heißschmelz-Klebstoffzusammensetzung, umfassend die Zusammensetzung aus irgendeinem der Ansprüche 1 bis 12, **dadurch gekennzeichnet, dass** Komponente A allein oder in Kombination mit einem weiteren thermoplastischen Additiv als thermoplastische Komponente benutzt wird.

14. Heißschmelz-Klebstoffzusammensetzung gemäß Anspruch 13, **dadurch gekennzeichnet, dass** das zusätzliche thermoplastische Additiv ausgewählt ist aus einem oder mehreren der folgenden Polyolefineharze, einem Polyisobutylen (PIB), einem Polyethylen mit niedriger Dichte (LDPE), einem linearen Polyethylen mit niedriger Dichte (LLDPE), einem Polyethylen mit ultrahohem Molekulargewicht (UHMWPE), einem isotaktischen Polypropylen, einem syndiotaktischen Polypropylen und einem Ethylen-Propylen-Copolymerharz; Polyamidharzen, Polyesterharzen, Polyetherharzen, Polysulfon (PSF) und Polyetheretherketon (PEEK); Polymethacrylatharzen, Polyvinylharzen und Fluorharzen und Polyacrylnitrilharzen (PAN).

15. Verwendung einer Zusammensetzung aus irgendeinem der Ansprüche 1 bis 12 als primärer, sekundärer oder einziger Dichtstoff in der Kantendichtung einer Isolierglaseinheit oder in einer Abstandhalter-Dichtungskombination in einer Isolierglaseinheit, entweder mit oder ohne Verwendung eines sekundären Dichtstoffs.

16. Zweiteilige kondensationshärtbare Zusammensetzung gemäß irgendeinem der Ansprüche 1 bis 12, **dadurch gekennzeichnet, dass** ein erster Teil Komponente A enthält und dass ein zweiter Teil Komponente C enthält und dass weitere Komponenten und/oder Zusätze in einem oder beiden Teilen vorliegen.

## Revendications

1. Composition durcissable consistant essentiellement en :
A. 100 parties en poids d'un polymère hydrocarboné organique ayant une masse moléculaire moyenne en nombre d'environ 500 à environ 300 000 et en moyenne au moins un groupe silyle hydrolysable par molécule ; et
B. 0,1 à 100 parties en poids pour 100 parties en poids de (A) d'un promoteur d'adhésion organique alcoxy-silyl-substitué d'une masse moléculaire moyenne en nombre dans la plage de 500 à 5 000, choisi dans le groupe consistant en le polbutadiène, le polyisoprène, le polyisobutylène, les copolymères d'isobutylène et d'isoprène, les copolymères d'isoprène et de butadiène, les copolymères d'isoprène et de styrène, les copolymères de butadiène et de styrène et les polymères de type polyoléfine préparés par hydrogénation du polyisoprène, du polybutadiène ou d'un copolymère d'isoprène et de styrène, d'un copolymère de butadiène et de styrène ou d'un copolymère d'isoprène, de butadiène et de styrène, di- ou tri-alcoxy-silyl-substitués, avec la condition que le composant (B) soit différent du composant (A) ;
C. 0,01 à 10 parties en poids pour 100 parties en poids de (A) d'un catalyseur de durcissement par condensation ;
D. 0 à 300 parties en poids pour 100 parties en poids de (A) d'une charge choisie dans le groupe consistant en les charges non renforçantes et les charges peu renforçantes ;
E. 0 à 150 parties en poids pour 100 partes en poids de (A) d'une charge renforçante ;
F. 0 à 5 parties en poids pour 100 parties en poids de (A) d'eau ou d'un composant contenant de l'humidité.

2. Composition durcissable selon la revendication 1 dans laquelle le composant (A) est saturé ou sensiblement saturé.

3. Composition durcissable selon la revendication 1 ou 2 dans laquelle la masse moléculaire moyenne en nombre du composant (A) est d'environ 1 000 à 50 000.

4. Composition durcissable selon la revendication 1 dans la1uelle le composant (A) est choisi dans le groupe consistant en une α-oléfine, le polyisobutylène, un copolymère éthylène-propylène, un polybutylène, un copolymère d'isobutylène avec l'isoprène, le polychloroprène, le polyisoprène, un copolymère d'isoprène avec le butadiène, un copolymère d'isoprène avec l'acrylonitrile, un copolymère d'isoprène avec le styrène, un copolymère d'isoprène avec l'alpha-méthylstyrène, le polybutadiène, un copolymère du butadiène avec le styrène, un copolymère de butadiène avec l'acrylonitrile, une polyoléfine préparée par hydrogénation d'un polyisoprène avec l'acrylonitrile, une polyoléfine préparée par hydrogénation d'un polyisoprène avec le styrène, une polyoléfine préparée par hydrogénation d'un polybutadiène avec l'acrylonitrile, une polyoléfine préparée par hydrogénation d'un polybutadiène avec le styrène, un copolymère d'isoprène avec l'acrylonitrile et un copolymère de butadiène avec l'acrylonitrile.

5. Composition durcissable selon l'une quelconque des revendications précédentes dans laquelle le groupe silyle hydrolysable est représenté par 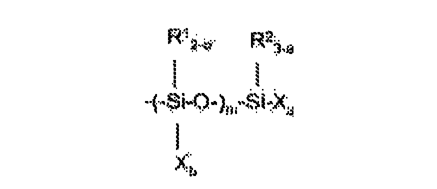 où R¹ et R² sont choisis chacun indépendamment parmi un groupe alkyle ayant 1 à 20 atomes de carbone, un groupe aryle ayant 6 à 20 atomes de carbone, un groupe aralkyle ayant 7 à 20 atomes de carbone et un groupe triorganosiloxy réprésenté par R'₃SiO-, où R' est un groupe alkyle monovalent ayant 1 à 20 atomes de carbone ; où X est un groupe hydroxyle ou un groupe hydrolysable ; a est 0 à 3, b est 0 à 2, m est 0 à 19 et a + mb est supérieur à 1.

6. Composition durcissable selon la revendication 5 dans laquelle X est choisi parmi -OCH₃ et -OCH₂CH₃.

7. Composition durcissable selon l'une quelconque des revendications précédentes dans laquelle le composant (B) est un polybutadiène alcoxysilyl-substitué.

8. Composition durcissable selon l'une quelconque des revendications précédentes dans laquelle le composant (B) est présent à raison de 1 à 50 parties en poids pour 100 parties en poids de composant (A) et/ou dans laquelle le composant (C) est 0,1 à 5 parties en poids d'un catalyseur de durcissement par condensation choisi dans le groupe consistant en le diacétate de dibutylétain, le diacétylacétonate de dibutylétain et le diméthoxylate de dibutylétain.

9. Composition durcissable selon l'une quelconque des revendications 1 à 7 dans laquelle le composant (C) est 0,1 à 5 parties en poids d'un catalyseur de durcissement par condensation choisi dans le groupe des catalyseurs à base de titanate et/ou zirconate ayant la formule générale Ti[OR⁵]₄ et Zr[OR⁵]₄ où chaque R⁵ peut être identique ou différent et représente un groupe hydrocarboné aliphatique primaire, secondaire ou tertiaire monovalent qui peut être linéaire ou ramifié contenant de 1 à 10 atomes de carbone ; les titanates et/ou zirconates chélatés.

10. Composition durcissable selon l'une quelconque des revendications précédentes dans laquelle le composant (D) est choisi dans le groupe de charges consistant en le carbonate de calcium, le talc, le carbonate de magnésium, la diatomite, l'oxyde de titane, la bentonite, la bentonite organique, l'oxyde ferrique, l'oxyde de zinc, l'huile de ricin hydrogénée, l'amiante, les fibres de verre, les filaments et les microballons creux en verre ou en plastique.

11. Composition durcissable selon l'une quelconque des revendications précédentes dans laquelle le composant (E) est choisi dans le groupe consistant en la silice fumée, la silice précipitée, l'anhydride d'acide silicique, l'acide silicique contenant de l'eau, le noir de carbone de qualité renforçante, l'argile calcinée, l'argile et le blanc de zinc actif.

12. Composition durcissable selon l'une quelconque des revendications précédentes comprenant en outre un composant thermoplastique et/ou jusqu'à 200 parties en poids d'un plastifiant ne produisant sensiblement pas de voile.

13. Composition adhésive thermofusible comprenant la composition selon l'une quelconque des revendications 1 à 12 **caractérisée en ce que** le composant A seul ou en combinaison avec un additif thermoplastique supplémentaire est utilisé comme composant thermoplastique.

14. Composition adhésive thermofusible selon la revendication 13 **caractérisée en ce que** l'additif thermoplastique supplémentaire est choisi parmi une ou plusieurs des résines de polyoléfine suivantes, un polyisobutylène (PIB), un polyéthylène basse densité (LDPE), un polyéthylène basse densité linéaire (LLDPE), un polyéthylène de ultra-haute masse moléculaire (UHMWPE), un polypropylène isotactique, un polypropylène syndiotactique et une résine de copolymère éthylène-propylène) ; les résines de polyamine ; les résines de polyester ; les résines de polyéther, une polysulfone (PSF), et une polyéther éther cétone (PEEK)) ; les résines de polyméthacrylate ; les résines polyvinyliques et les résines fluorées et les résines de polyacrylonitrile (PAN).

15. Utilisation d'une composition selon l'une quelconque des revendications 1 à 12 comme produit d'étanchéité primaire, secondaire ou unique dans le joint d'étanchéité latéral d'une unité de verre isolante ou dans une combinaison d'élément d'écartement/joint d'étanchéité dans une unité de verre isolante avec ou sans utilisation d'un produit d'étanchéité secondaire.

16. Composition durcissable par condensation en deux parties selon l'une quelconque des revendications 1 à 12 **caractérisée en ce qu'**une première partie contient le composant A et une seconde partie contient le composant C et tous les autres composants et/ou additifs sont présents dans l'une ou l'autre partie ou dans les deux parties.
